# EUROPEAN PATENT SPECIFICATION

(11) **EP 4 154 954 B1**
(45) Date of publication and mention of the grant of the patent: **21.05.2025**
(21) Application number: 22196471.1
(22) Date of filing: 20.09.2022
(51) Int. Cl.: A63C 17/00, A63C 17/12

(54) **ROAD VEHICLE FOR SINGLE PERSON WITH INDEPENDENT CONTROL OF OSCILLATION OF THE TWO SKIDS**
STRASSENFAHRZEUG FÜR EINE PERSON MIT UNABHÄNGIGER STEUERUNG DER SCHWINGUNG DER BEIDEN KUFEN
VÉHICULE ROUTIER POUR UNE SEULE PERSONNE AVEC CONTRÔLE INDÉPENDANT DE L'OSCILLATION DES DEUX PATINS

(30) Priority: 23.09.2021 IT 202100024516
(43) Date of publication of application: 29.03.2023
(73) Proprietor: L.M. Gianetti S.r.l., 10121 Torino (IT)
(72) Inventor: VIARENGO, Marco, 10132 Torino (IT)
(74) Representative: Emmi, Mario

(56) References cited:
- WO-A2-2009/078634
- GB-A- 1 505 224
- US-A- 4 050 713
- US-A- 4 165 093
- US-A1- 2002 050 695
- US-A1- 2020 031 418

## Description

### Scope of the invention

The present invention relates to the technical field of means of city transport for personal use, specifically those destined to the transport of a single person.

More specifically, the invention relates to an innovative vehicle for personal use, like a kick scooter, structured to guarantee a precise and safer control while cornering, in order to corner during the route indeed.

### Brief outline of prior art

Personal vehicles used for city transport of a single person have been known for a long time. For examples, electric kick scooters are becoming increasingly widespread.

The need to reduce the emissions of pollutants into the atmosphere and the need to reduce city traffic, in addition to move readily along city streets, is increasing widely the production and sale and the use of vehicles of the kick scooter type.

The kick scooter is generally driven by an electric motor, in order not to pollute and have quite low management costs.

The kick scooter is formed by a single board which forms a support plane for the user who indeed places both feet on the board like a *"mono-sky".* A handle stands from the board and forms the two handles where there are the acceleration/braking controls. The kick scooter is generally provided with two wheels, that is a front wheel and a rear wheel and therefore the user moves maintaining the balance on the board. The wheels, such as the front one or the rear one or both, are driven into rotation by the electric motor. The handle rotation generally controls the rotation of the front wheel connected to it thus enabling to corner and to maintain the desired direction.

That being said, at the current state of the art, the kick scooter is not stable at all since it is actually constituted by a single board.

In addition, the user generally rotates the handle in order to corner and this causes a rotation of the front wheel and consequently a cornering with an inclination of the board that could be harmful for the user's balance.

Further disadvantages connected to the kick scooter, that is to the single board, are the following ones:
Since the steering column of the kick scooter is directly in front of the user's feet, in the event of braking, positioning the foot on the ground is certainly complicated because it will find the steering column as an obstacle, thereby causing a possible fall.

Since the front wheel of the kick scooter has very small section and diameter, overturning movements caused by road unevenness or any obstacles to the rotation of the front wheel increase remarkably.

Since the kick scooter has a single board, it does not allow to stand in balance when it is stationary.

In addition, the position assumed by the body on the kick scooter is unnatural given that the chest is rotated with respect to the legs and this causes weariness and possible health problems.

The kick scooter, due to the small footprint of the wheels on the ground and the small fork trail, does not allow to be driven without using the two hands on the handle continuously.

It is not possible to install high-performance braking systems on the front wheel because they would generate a high overturning moment that is not opposed by a suitable stabilizing moment caused by the driving position.

The prior publications US4165093, GB1505224, US2002/050695, US 2020/031418 are also known.

### Summary of the invention

Therefore, the need of a technical solution that could reduce the above-mentioned issues is felt.

In particular, the aim of the present invention is to provide a road vehicle for the transport of a single person that is stabler, easier to use, more comfortable and certainly safer.

In particular, the aim of the present invention is to provide a road vehicle for the transport of a single person that is stable and safe both while cornering and during its usual use, thereby minimizing the risks of falls due to sudden braking.

These and other aims are therefore achieved with the present road vehicle, according to claim 1.

This wheeled road vehicle comprises:
- A frame (42, 42');
- A handle (30) for driving control;
- At least one front wheel (54);
- According to the invention, the vehicle further comprises:
   - A first skid (11) and a second skid (12), each one equipped with at least one wheel (20, 21);
   - Each one of said first skid and second skid form a support plane for a user's foot;

In this way, the user is positioned in balance on the vehicle by positioning a foot onto a skid and the other foot onto the other skid, thereby assuming a position like skis.

In addition, said first and second skid are further connected to the frame independently from each other so that each skid can move, preferably rotate, independently from each other with respect to said frame.

Therefore, advantageously, unlike the kick scooter, the user must no longer position his legs in a forward position with respect to each other on a single board, but he can instead assume a regular and natural standing position, with slightly spread apart legs parallel to each other as a function of the reciprocal position assumed by the two boards (skids).

Advantageously, therefore, cornering is more controllable since each skid is equipped with own motion with respect to the frame to facilitate cornering.

This solution solves all said technical disadvantages.

The use of two skids (or boards in other words) parallel to each other enables to assume a natural position like the one of a skier on skis.

This guarantees stability in all operative conditions.

In addition, the connection of the skids to the frame is not rigid but movable instead, and, in particular, advantageously with a possibility of at least one rotation of each skid with respect to the frame, preferably thanks to a hinging pin, and with each skid that is movable (preferably rotatable) independently from the other skid.

Therefore, according to this solution, an oscillation, for example a rotation, of each skid, can be exerted with one's own body weight.

This free oscillation, preferably a rotary oscillation, of each skid, can be controlled by the user depending on the transfer of weight exerted on the two skids, and this enables to facilitate cornering.

according to the invention, recall means (61, 62) are further comprised, arranged so as to maintain each skid in a balance position and to exert a force onto each skid which tends to bring back each skid to said balance position when a movement of the skid moves the skid from its said balance position.

Therefore, this oscillation is controlled by the recall means which tend to bring back the skid to a balance position.

Therefore, while cornering, the vehicle assumes an inclined position but the independent oscillation of the two skids enables them to be positioned, through the action of the user's weight, in the best condition of cornering, exactly like the cornering of a skier on skis. This guarantees precision and safety while cornering.

Moreover, now the user places each foot onto a support surface and this confers greater stability, even when the vehicle is stationary.

The recall means can be advantageously be in the form of elastic means, for example springs, but the use of equivalent systems such as double-acting actuators of the hydraulic, pneumatic, etc. type is not excluded.

Therefore, advantageously, said movement of each skid can be in the form of at least one rotation of each skid with respect to the frame.

Therefore, advantageously, said first and second skid can be mounted rotatably around a plane Z forming a longitudinal plane for said vehicle.

For this purpose, advantageously, a pin (50) passing transversally through the frame and to which said first and second skid connect rotatably, can be comprised.

The pin is positioned orthogonally to the longitudinal plane Z and, therefore, each skid can rotate on said plane Z with a rotation axis that is the one of said pin.

Advantageously, in a preferred solution, said recall means can comprise or are in the shape of elastic means (61, 62) .

Advantageously, said elastic means are then arranged in such a way as to maintain each skid in an elastic balance position and exert an elastic force onto each skid which tends to bring back each skid to said balance position when a movement of the skid, for example said rotation, moves the skid from its said balance position.

As an alternative, advantageously, said recall means can comprise or are in the shape of actuators, preferably double-acting.

Advantageously, the end part of each skid that connects to the frame can form a first surface (18) and a second surface (19) overlapped each other.

According to the invention, a recall means comprised between said first surface (18) and a surface (43) of the frame and a further recall means can be comprised between said second surface (19) and a second surface (44) of the frame, are part of the inventive wheeled road vehicle.

As mentioned above, said recall means can be elastic means, preferably a spring or springs.

Advantageously, in all the described configurations, the front wheel can be controlled through the handle.

Advantageously, in all the described configurations, an electric motor can be comprised to generate the traction onto the vehicle.

Advantageously, the handle (30) can be connected to the frame rotatably in such a way as to be able to rotate it to the right or to the left to control the vehicle and therefore to set the cornering.

Here is also described the use of the present vehicle according to one or more of the previous above-described features to move a user.

According to the use, the user gets on the vehicle by placing a foot onto each skid and controlling the vehicle through the handle and any oscillation of the two skids depending on the travelled route.

### Brief description of the drawings

Further features and advantages of the present vehicle, according to the invention, will become apparent from the following description of preferred embodiments thereof, given only by way of non-exhaustive example, with reference to the attached drawings, wherein:
- Figure 1 is a schematic lateral view of the vehicle according to a plane Z passing according to the longitudinal length of the vehicle;
- Figure 2 is a view from above;
- Figure 3 is an overall axonometric view;
- Figure 3A is a further axonometric view to highlight the pin with respect to which the two skids 11 and 12 are rotatable (see the double direction of arrow) independently from each other;
- Figure 4 shows in detail the constructive solution which includes the springs to enable the oscillation around the rotation fulcrum of each skid (11, 12):
- Figure 5 schematizes again the functioning of the elastic system of figure 4;
- Figure 6 schematizes a cornering;
- Figure 7 highlights how, according to the present solution, the cornering generates a rotation of the two skids around the rotary pin;
- Figure 8 highlights, in an enlarged view, the arrangement that can be assumed by the two skids while cornering.

### Description of some preferred embodiments

The present invention relates to a wheeled road vehicle comprising:
- A frame (42, 42');
- A handle (30);
- At least one front wheel (54);
- According to the invention, the vehicle further comprises:
   - A first skid (11) and a second skid (12), each one equipped with at least one wheel (20, 21);
   - Each one of said first skid and second skid forming a support plane for a user's foot and in use the user stands on said two skids.

In this way, the user puts in use each foot onto a skid and controls the vehicle, standing on the vehicle with the handle positioned forwards with respect to said skids.

In addition, said first and second skid are movable independently of each other.

According to the invention, said first and second skid are rotatable independently of each other.

In particular, they are connected to the frame in such a way that each skid can move, preferably can rotate, with respect to the frame to which it is connected and with each skid which is then movable, preferably rotatable, independently of the other skid.

Advantageously, a possible embodiment can further comprise recall means (61, 62) arranged so as to maintain each skid in a balance position and to exert a force onto each skid which tends to bring back each skid to said balance position when a movement of the skid moves the skid from its said balance position.

Therefore, if the user exerts with the foot a force that moves, for example makes the skid rotate with respect to the frame by moving it away from the balance position, said recall means tend to bring it back to said balance position once the force exerted by the user has been released.

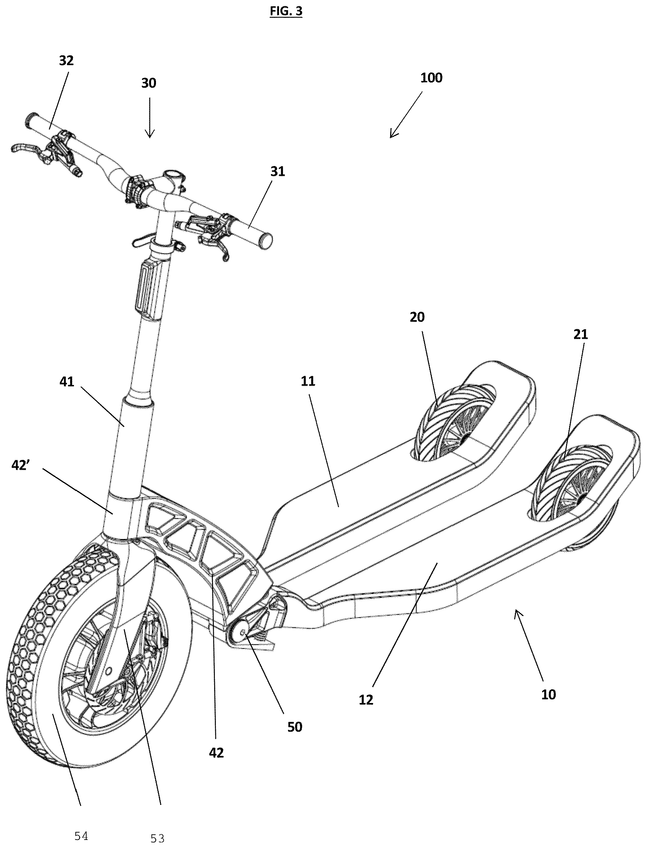

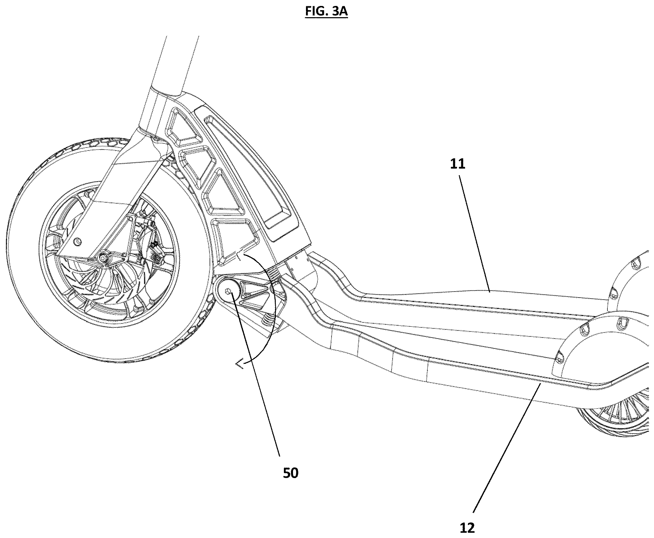

Describing the invention in greater detail, according to the invention, figure 3 describes in axonometric view a vehicle 100 according to the present invention.

The vehicle provides a support plane 10 for the user, who, according to the invention, is formed by two skids 11 and 12 independent of each other and separated from each other.

Each skid (or board in other words) forms a support plane (11, 12) for the users' foot which is placed on it, therefore each board or support plane is designated to support a part of the user's weight.

In this way, the user acts as placing his feet on two skis.

Each skid provides on the rear a seat into which a wheel (20, 21) is inserted (for example in a through way) rotatably.

Therefore, on the rear at least two wheels are provided, that is a wheel for each skid.

Obviously, the solution in which each skid can have two or more wheels is not excluded, for example two coupled wheels one next to each other to confer a greater stability.

Therefore, according to the solution shown in figure 3, each skid provides on the rear a seat passing the whole thickness of the skid and where at least one wheel is housed rotatably.

Obviously, different housing solutions of the wheel can be provided without exceeding the scope of the present invention.

Figure 3 shows the handle 30 which, as per prior art, provides the two extensions 31 and 32 destined to be held by the user and on which the traditional controls are, that is braking lever, accelerator, etc.

The vertical tubular element 41 branches off from the central part with respect to the two extensions.

Therefore, the handle is connected to the support frame formed by the part 42 through the tubular element 41.

In its turn, the frame is connected to the two skids (11, 12).

The vertical tubular element 41 is inserted rotatably into the ring 42' that is part of the frame 42. The vertical tubular element 41 is integral with the two forks 53 so that the user can control the rotation of the vertical tubular element 41 through a rotation of the steering wheel 30 thereby rotating the front wheel connected to the two forks for cornering.

Obviously, specific rotary bearings can be inserted into the ring 42' to facilitate the rotation of the vertical tubular element 41 with respect to the annular seat 42' where it passes and it is placed rotatably.

At least one front wheel 54 is then connected to the handle through the fork 53, that can be rigid or dampened.

Also in this case, the front wheel could be constituted by single wheel or by two or more wheels beside each other.

These components are well known per se in the state of the art and they are no specific subject of the present invention and for this reason, they are not described further herewith.

The movement of said described vehicle can be obtained through an electric motor powered by a battery for example, such as of the rechargeable type, as already widely known in the field of kick scooter, for example.

The motor can activate into rotation the front wheel and/or the rear wheels in an equivalent way.

The motor can be housed into a suitable seat, for example into the frame 42.

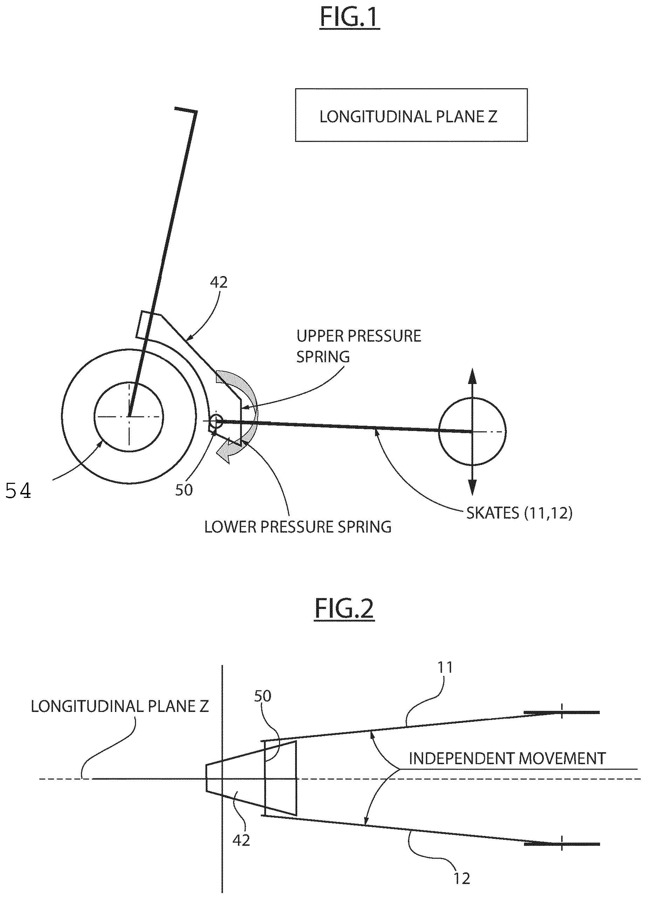

Describing the invention in greater detail, figure 1 schematizes the solution described with the steering wheel and vertical tubular element 41 which is connected to the frame 42 rotatably.

According to the invention, a rotary pin 50 is provided, schematized in figure 1 and 2 as well, passing transversally through the frame 42.

As it can be seen in figure 1, it is placed at a certain distance with respect to the passage of the vertical tubular element 41, preferably at the end of the frame 42 opposite to that one of passage of the vertical tubular element 41.

The rotary pin can be for example a pin passing transversally into the frame 42, as for example schematized in figures (see for example figure 2).

Therefore, according to the invention, the first skid 11 and the second skid 12 are connected independently from each other to said pin.

A skid is connected to the right side of the frame and the other one is connected to the left side of the frame, both through the rotary pin.

A single pin that passes through the whole frame transversally as per figure 2 or two separated pins can be provided.

In any case, in all solutions, as schematized in figure 2 as well, the pin 50 passes through the frame 42 passing into a specific channel, thereby having a part exceeding on the right and left side of the frame, that is it protrudes partially from the frame or anyway from its passage seat.

Each one of the two skids is connected to said exceeding part of the pin in such a way as to be rotatably in connection to said pin, as also schematized by the arrow direction of figure 1.

Therefore, the right skid can rotate around the axis of the pin with respect to the frame 42 in a way independent from the rotation of the other skid.

Therefore, the pin is fixed to the frame with the skids connected to the pin/s rotatably.

Therefore, both the right skid and the left skid are rotatable around the pin independently from each other.

For example, a skid can rotate upwards whereas the other one could rotate downwards and/or vice versa.

Constructively, for example, a rotatable bearing could be connected to the two ends of the pin which is inserted into a specific seat of the skid and that would act as a rotatable coupling skid-pin.

Therefore, figure 1 shows with the double direction of arrow applied to the rear wheels, the raising/lowering movement that each wheel of the skid can perform thanks to the rotation allowed to the skid, that is a high-low rotation around the pin with respect to the frame.

The wheel is connected to the skid, therefore the raising and/or lowering of the skid determines the raising and lowering of the wheel.

The wheel could be connected to the skid also through any dampeners (totally optional).

More specifically, figure 1 shows a lateral view of a longitudinal plane Z of the vehicle that is also highlighted (this plane Z) in figure 2.

The rotation of the two skids occurs as highlighted well in figure 2 on said plane Z or substantially on said plane Z since, in fact, the pin 50 (that represents the rotation pin of the two skids) is orthogonal or substantially orthogonal to said plane Z.

According to the invention, said recall means are further comprised and in a preferred embodiment of the invention they are elastic means, for example springs, which control the oscillation of the skids.

Therefore, in particular, there are provided a first spring and a second spring arranged in the frame, preferably in proximity of the pin, in such a way as to be interposed to each skid.

Therefore, the skid has a certain rotation play around the pin both towards the ground and in the opposite direction, upwards.

Depending on the fact that the pushing is downwards or upwards, this movement will find the resistance of the corresponding spring that, by compressing it, tends to bring the skid to the position of elastic balance in which the springs are balanced (more or less a horizontal position with respect to the ground).

Therefore, the result is that of having an independent oscillation for the two skids, that is each skid can rotate around said pin along a rotary path whose end strokes are limited structurally by the maximum compression of the springs.

The spring that is compressed tends to push the skid to the opposite direction.

Therefore, by pushing onto the skid, it rotates to then have automatically a motion of elastic return towards the balance condition.

Therefore, the springs have the purpose of stabilizing and counteracting the forces acting onto the vehicle in such a way as to damp the reactions that it has on the driver.

In this way, this oscillatory independent motion of the two skids enables to control the cornering better exactly like an induced acceleration on the skis caused by the movement of the body barycenter that is counteracted by the force of the legs that results in a moment around the axis parallel to the vehicle motion.

This vehicle enables a use in complete balance without the need to place feet onto the ground.

Since the two feet are aligned with the chest, one assumes a position completely complying with the standard of regular use of the human body that does not cause a high stress to it.

Since the steering-column is not in front of the feet, a fast movement of the foot to the front part in the event of emergency becomes more natural.

Since the front wheel has a greater diameter and a steering kinematic with fork trail, a greater stability is achieved.

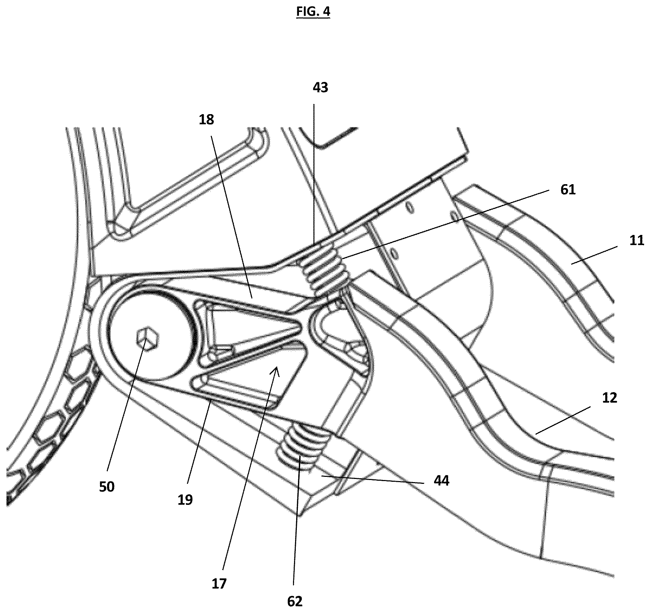

Therefore, moving to figure 4, the solution of figure 1 and 2 is highlighted constructively in greater detail.

The figure shows the end of the pin 50 to which the two skids are connected and they are partially visible in figure 4 but well visible in figure 3A.

Two springs, that is an upper spring 61 and a lower spring 62 are arranged on each end of the skid, connected rotatably to the pin 50.

Although figure 4 shows the solution of the side of the skid 12, this is symmetrically valid for the skid 11.

Therefore, the skid 12 is connected to the pin in correspondence of its end part that is shaped in such a way as to form a support and connection plane for the two springs.

Said end part 17 of the skid forms in fact an upper surface 18 and an equivalent lower surface 19 that are two surfaces to which an end of a spring is fixed for each one.

Therefore, with reference to figure 4, the upper spring 61 leans against the surface 18 by one end thereof to which it is fixed (for example by welding or other methods).

In the same way, the lower spring 62 leans against and is fixed to the surface 19.

The other end of each spring leans against and is fixed to a second surface 44 being part of the frame 42 or anyway integral with the frame 42.

In particular, figure 4 shows these surfaces with numbers 43 and 44.

Therefore, the spring 61 is comprised between the two surfaces 18 and 41 whereas the spring 62 is comprised between the two surfaces 19 and 42.

Therefore, the skid 11 can rotate around the pin 50 (therefore around the axis of the pin) thereby moving its surface 18 towards the surface 43 (this means that contextually the surface 19 moves away from the second surface 44) or moving its surface 18 away from the surface 43 (this means that the surface 19 moves closer to the second surface 44).

According to this possible rotary motion, there is a condition in which for example the spring 61 is compressed whereas, contextually, the spring 62 extends, or vice versa.

Both cases generate an elastic force that tends to bring the skid rotatably to the condition of elastic balance with a counter-rotation.

The balance condition and the condition in which all forces acting onto the skid, and therefore also the elastic ones, are balanced on each other.

The same thing, both functionally and structurally occurs to the other skid.

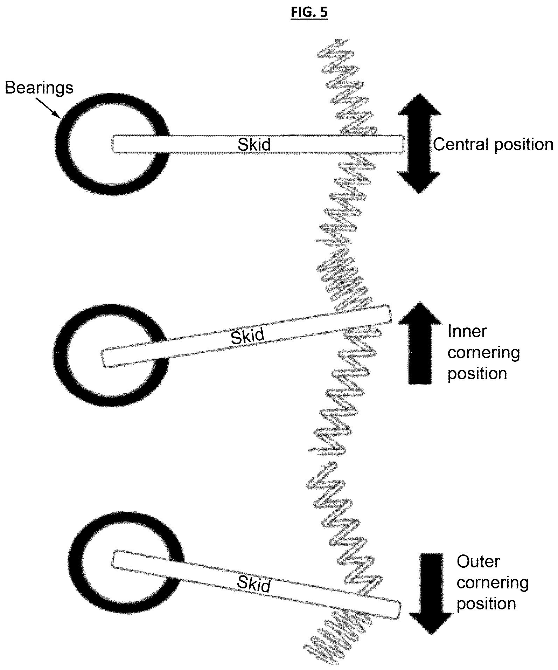

What has been described is then schematized in figure 5.

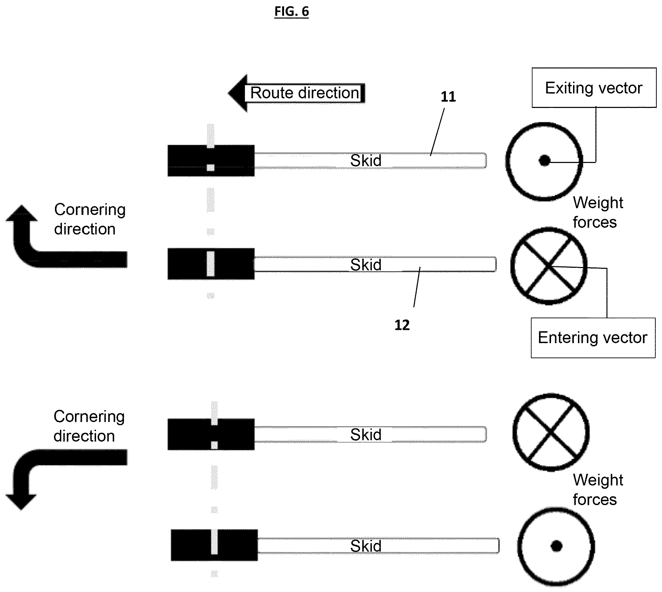

The vehicle described functions in use in the following way, with reference for example to figure 6-8.

The user gets on the means by positioning a foot onto a skid and the other foot onto the other skid, therefore the barycenter is positioned vertically between the two skids. The position is like a skier on two skis.

The handle enables the regular control of the means to steer, accelerate, brake, etc.

The electric motor enables the traction of the vehicle.

According to the proposed solution, each skid has then a possibility of rotation, actually rotating on a plane Z longitudinal to the vehicle, as highlighted in figure 1, figure 2 and figure 8.

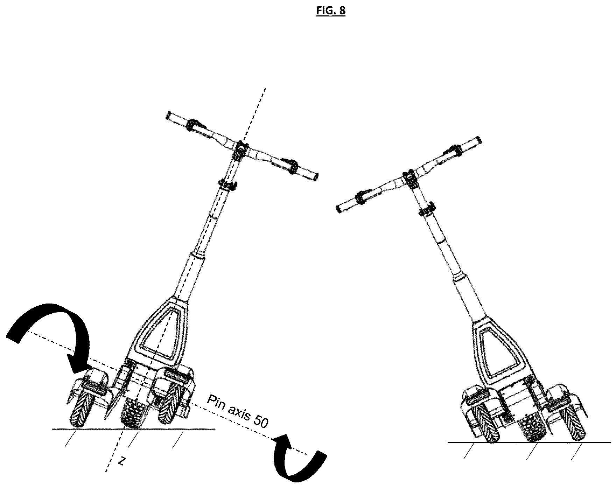

For example, figure 8 has highlighted an inclination to the right and an inclination to the left to corner twice. In the inclination to the right side (left skid of figure 8) the support ground has been highlighted, the axis of the rotary pin and the longitudinal plane Z of the vehicle to highlight, while cornering, the independent rotation of the two skids to assume the configuration shown in figure. The same occurs to the cornering that results in an inclination to the left side (image of the right vehicle in figure 8).

In this way, there is substantially a raising/lowering motion from/to the ground of the wheels of each skid depending on the elastic tilting that the user transmits to the skid.

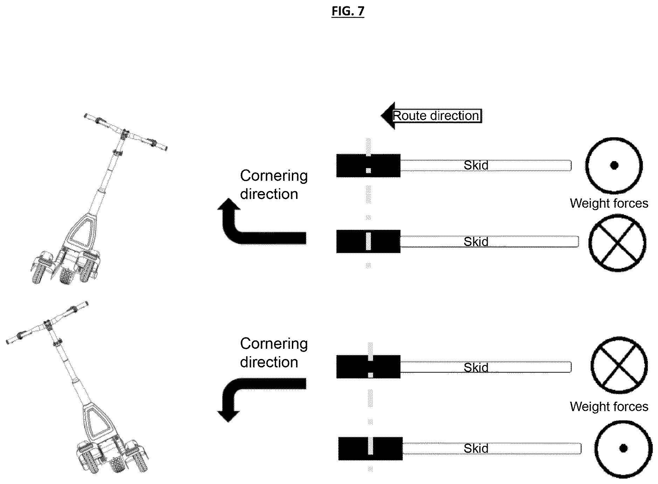

Figure 6 and figure 7 show in fact that by pushing with the weight onto the skid 12 to the ground (see the direction of the entering vector) and unloading the weight from the other skid 11 (direction of exiting vector), a clockwise cornering is performed.

A counter-clockwise cornering occurs exactly by operating in the opposite way.

Therefore, the control of the vehicle occurs not only with the steering wheel that rotates to the right and to the left, but also helped by this oscillatory-rotative way that the two skids can have while cornering and therefore as a consequence of the inclination assumed by the vehicle.

The wheels and the skis (boards or skids) tilt while cornering and given that the rear wheels are free to rotate, they will vary the number of turns depending on their positioning with respect to the cornering (the wheel on the outer cornering will rotate more quickly with respect to the wheel on the inner cornering), see for example figure 6.

The solution with the rotary pin 50 is the preferred solution even if it is possible a solution with a connection such as to determine not only a rotary motion of the wheels but also, for example, a rotary-translative motion.

The elastic means could be replaced equally by means for example of the pneumatic or hydraulic type even if the solution which provides springs is certainly the most preferred one due to its simplicity and cheapness.

The sizes of the described vehicle are like the ones of a known and traditional kick scooter and therefore structured for the transport of a single person.

## Claims

1. A wheeled road vehicle comprising:
- A frame (42, 42');
- A handle (30);
- At least one front wheel (54);
- And wherein the vehicle further comprises:
- A first skid (11) and a second skid (12), each one equipped with at least one wheel (20, 21);
- Each one of said first skid and second skid forming a support plane for a user's foot;
- Said first and second skid being connected to the frame so that each skid can move independently of each other with respect to said frame;
**Characterized by the fact that:**
- The end part of each skid which is connected to the frame forms a first surface (18) and a second surface (19) opposite each other and wherein a recall means comprised between said first surface (18) and a surface (43) of the frame is provided and a further recall means comprised between said second surface (19) and a second surface (44) of the frame is provided.

2. The road vehicle, according to claim 1, further comprising recall means (61, 62) arranged so as to maintain each skid in a balance position and to exert a force onto each skid which tends to bring back each skid to said balance position when a movement of the skid moves the skid from its said balance position.

3. The road vehicle, according to claim 1 or 2, wherein said movement of each skid with respect to the frame is in the form of at least one rotation of said skid with respect to the frame.

4. The road vehicle, according to one or more of the previous claims, wherein said first and second skid are rotatable around a plane Z forming a longitudinal plane for said vehicle.

5. The road vehicle, according to one or more of the previous claims, comprising a pin (50) passing transversally through the frame and to which said first and second skid connect rotatably.

6. The road vehicle, according to one or more of the previous claims, wherein said recall means comprise or are in the shape of elastic means (61, 62) arranged in such a way as to maintain each skid in a balance position and exert an elastic force onto each skid which tends to bring back each skid to said balance position when a rotation of the skid moves the skid from its said balance position.

7. The road vehicle, according to one or more of the previous claims from 1 to 5, wherein said recall means comprise or are in the shape of actuators, preferably double-acting.

8. The road vehicle, according to one or more of the previous claims, wherein said recall means are elastic means, preferably a spring.

9. The road vehicle, according to one or more of the previous claims, wherein the front wheel can be controlled through the handle.

10. The road vehicle, according to one or more of the previous claims, wherein an electric motor is comprised to generate the traction onto the vehicle.

11. The road vehicle, according to one or more of the previous claims, wherein said handle (30) is connected to the frame rotatably in such a way as to be able to rotate said handle to the right or to the left to control the vehicle and therefore to set the cornering.

12. The use of the vehicle, according to one or more of the previous claims, for the user's movement.

13. The use of the vehicle, according to claim 12, wherein the user gets on the vehicle by placing a foot onto each skid and controlling the vehicle through the handle and any oscillation of the two skids depending on the travelled route.

## Patentansprüche

1. Straßenfahrzeug mit Rädern, umfassend:
- Einen Rahmen (42, 42');
- Einen Handgriff (30);
- Mindestens ein Vorderrad (54);
- Und wobei das Fahrzeug ferner umfasst:
- Eine erste Kufe (11) und eine zweite Kufe (12), die jeweils mit mindestens einem Rad (20, 21) ausgestattet sind;
- Wobei jede von der ersten und zweiten Kufe eine Stützfläche für den Fuß eines Benutzers/einer Benutzerin bildet;
- wobei die erste und zweite Kufe mit dem Rahmen verbunden sind, so dass sich jede Kufe in Bezug auf den Rahmen unabhängig voneinander bewegen kann;
**Dadurch gekennzeichnet, dass:**
- Der Endteil jeder Kufe, die mit dem Rahmen verbunden ist, eine erste Oberfläche (18) und eine zweite Oberfläche (19), die einander gegenüberliegen, bildet und wobei ein Rückstellmittel zwischen der ersten Oberfläche (18) und einer Oberfläche (43) des Rahmens vorgesehen ist und ein weiteres Rückstellmittel zwischen der zweiten Oberfläche (19) und einer zweiten Oberfläche (44) des Rahmens vorgesehen ist.

2. Straßenfahrzeug nach Anspruch 1, ferner umfassend Rückstellmittel (61, 62), die so angeordnet sind, dass sie jede Kufe in einer Gleichgewichtsposition halten und eine Kraft auf jede Kufe ausüben, die dazu neigt, jede Kufe in die Gleichgewichtsposition zurückzubringen, wenn eine Bewegung der Kufe die Kufe aus ihrer Gleichgewichtsposition bewegt.

3. Straßenfahrzeug nach Anspruch 1 oder 2, wobei die Bewegung jeder Kufe in Bezug auf den Rahmen in Form mindestens einer Drehung der Kufe in Bezug auf den Rahmen erfolgt.

4. Straßenfahrzeug nach einem oder mehreren der vorhergehenden Ansprüche, wobei die erste und zweite Kufe um eine Ebene Z drehbar sind, die eine Längsebene für das Fahrzeug bildet.

5. Straßenfahrzeug nach einem oder mehreren der vorhergehenden Ansprüche, mit einem Stift (50), der quer durch den Rahmen verläuft und mit dem die erste und zweite Kufe drehbar verbunden sind.

6. Straßenfahrzeug nach einem oder mehreren der vorhergehenden Ansprüche, wobei die Rückstellmittel elastische Mittel (61, 62) umfassen oder als solche ausgebildet sind, die so angeordnet sind, dass jede Kufe in einer Gleichgewichtsposition gehalten wird und eine elastische Kraft auf jede Kufe ausgeübt wird, die dazu neigt, jede Kufe in die Gleichgewichtsposition zurückzubringen, wenn eine Drehung der Kufe die Kufe aus ihrer Gleichgewichtsposition bewegt.

7. Straßenfahrzeug nach einem oder mehreren der vorhergehenden Ansprüche 1 bis 5, wobei die Rückstellmittel Aktuatoren, vorzugsweise doppeltwirkend, umfassen oder als solche ausgebildet sind.

8. Straßenfahrzeug nach einem oder mehreren der vorhergehenden Ansprüche, wobei die Rückstellmittel elastische Mittel sind, vorzugsweise eine Feder.

9. Straßenfahrzeug nach einem oder mehreren der vorhergehenden Ansprüche, wobei das Vorderrad über den Handgriff gesteuert werden kann.

10. Straßenfahrzeug nach einem oder mehreren der vorhergehenden Ansprüche, wobei ein Elektromotor umfasst ist, um die Traktion auf das Fahrzeug zu erzeugen.

11. Straßenfahrzeug nach einem oder mehreren der vorhergehenden Ansprüche, wobei der Handgriff (30) drehbar mit dem Rahmen verbunden ist, so dass der Handgriff nach rechts oder links gedreht werden kann, um das Fahrzeug zu steuern und damit die Kurvenfahrt einzustellen.

12. Verwendung des Fahrzeugs nach einem oder mehreren der vorhergehenden Ansprüche für die Bewegung des Benutzers/der Benutzerin.

13. Verwendung des Fahrzeugs nach Anspruch 12, wobei der Benutzer/die Benutzerin auf das Fahrzeug steigt, indem er einen Fuß auf jede Kufe stellt und das Fahrzeug über den Handgriff und eine eventuelle Oszillation der beiden Kufen in Abhängigkeit von der gefahrenen Strecke steuert.

## Revendications

1. Véhicule routier à roues comprenant :
- un châssis (42, 42') ;
- une poignée (30) ;
- au moins une roue avant (54) ;
- et dans lequel le véhicule comprend en outre :
- un premier patin (11) et un second patin (12), chacun équipé d'au moins une roue (20, 21) ;
- chacun desdits premier et second patins formant un plan d'appui pour le pied d'un utilisateur :
- lesdits premier et second patins étant reliés au châssis de manière à ce que chaque patin puisse se déplacer indépendamment l'un de l'autre par rapport audit châssis ;
**caractérisé en ce que :**
- la partie terminale de chaque patin qui est reliée au cadre forme une première surface (18) et une seconde surface (19) opposées l'une à l'autre et dans lequel un moyen de rappel compris entre ladite première surface (18) et une surface (43) du cadre est prévu et un autre moyen de rappel compris entre ladite seconde surface (19) et une seconde surface (44) du cadre est prévu.

2. Véhicule routier, selon la revendication 1, comprenant en outre des moyens de rappel (61, 62) disposés de manière à maintenir chaque patin dans une position d'équilibre et à exercer une force sur chaque patin qui tend à ramener chaque patin dans ladite position d'équilibre lorsqu'un mouvement du patin éloigne le patin de ladite position d'équilibre.

3. Véhicule routier, selon la revendication 1 ou 2, dans lequel ledit mouvement de chaque patin par rapport au châssis se présente sous la forme d'au moins une rotation dudit patin par rapport au châssis.

4. Véhicule routier selon l'une ou plusieurs des revendications précédentes, dans lequel lesdits premier et second patins sont rotatifs autour d'un plan Z formant un plan longitudinal pour ledit véhicule.

5. Véhicule routier, selon l'une ou plusieurs des revendications précédentes, comprenant un axe (50) traversant transversalement le châssis et auquel lesdits premier et second patins se raccordent de manière rotative.

6. Véhicule routier, selon l'une ou plusieurs des revendications précédentes, dans lequel lesdits moyens de rappel comprennent ou ont la forme de moyens élastiques (61, 62) disposés de manière à maintenir chaque patin dans une position d'équilibre et à exercer sur chaque patin une force élastique qui tend à ramener chaque patin dans ladite position d'équilibre lorsqu'une rotation du patin éloigne le patin de ladite position d'équilibre.

7. Véhicule routier, selon l'une ou plusieurs des revendications précédentes 1 à 5, dans lequel lesdits moyens de rappel comprennent ou ont la forme d'actionneurs, de préférence à double effet.

8. Véhicule routier, selon l'une ou plusieurs des revendications précédentes, dans lequel lesdits moyens de rappel sont des moyens élastiques, de préférence un ressort.

9. Véhicule routier, selon l'une ou plusieurs des revendications précédentes, dans lequel la roue avant peut être commandée par la poignée.

10. Véhicule routier, selon l'une ou plusieurs des revendications précédentes, dans lequel un moteur électrique est utilisé pour générer la traction sur le véhicule.

11. Véhicule routier, selon l'une ou plusieurs des revendications précédentes, dans lequel ladite poignée (30) est reliée au châssis de manière rotative de façon à pouvoir tourner ladite poignée vers la droite ou vers la gauche pour commander le véhicule et donc pour régler le virage.

12. Utilisation du véhicule, selon l'une ou plusieurs des revendications précédentes, pour le déplacement de l'utilisateur.

13. Utilisation du véhicule selon la revendication 12, dans laquelle l'utilisateur monte sur le véhicule en plaçant un pied sur chaque patin et en commandant le véhicule par le biais de la poignée et de l'oscillation éventuelle des deux patins en fonction de l'itinéraire parcouru.
